# DEMANDE DE BREVET EUROPEEN

(11) **EP 3 470 701 A1**
(43) Date de publication de la demande: **17.04.2019**
(21) Numéro de dépôt: 18194776.3
(22) Date de dépôt: 17.09.2018
(51) Int. Cl.: F16D 65/00, F16D 65/092

(54) **SYSTÈME DE FREIN DE VÉHICULE AVEC DÉFLECTEUR D'AIR ET VÉHICULE UTILISANT CE SYSTÈME**

(30) Priorité: 11.10.2017 FR 1759532
(71) Demandeur: PSA Automobiles SA, 78300 Poissy (FR)
(72) Inventeur: RIGUEL, FREDERIC, 92300 LEVALLOIS PERRET (FR); ALLEGRE, JEAN MARC, 91470 LIMOURS (FR); PALPACUER, ERIC, 75013 PARIS (FR); PAJOT, KARINE, 91370 VERRIERES LE BUISSON (FR); PORRO, JEREMY, 77970 PECY (FR)

(57) **Abrégé**

Ce système de frein de véhicule comprenant un disque rotor, un étrier comportant deux plaquettes (21) enserrant le disque rotor, un moyen d'approvisionnement en air sous pression, au moins l'un des supports (15) présentant au moins une fente de circulation d'air sous pression provenant du moyen d'approvisionnement, cet air sous pression formant un rideau d'air (22), s'étendant entre l'une des plaquettes (21) et le disque rotor, destiné à bloquer les particules provenant de la plaquette dans un espace clos.

L'invention concerne également un véhicule automobile comportant ce système.

## Description

La présente invention se rapporte aux systèmes de freinage non polluants, destinés notamment à être utilisés sur des véhicules routiers ou ferroviaires. L'invention concerne en particulier des systèmes de freinage aptes à capter par aspiration des particules et poussières, résultant de l'abrasion, émises par le freinage à friction.

De façon classique, le freinage d'un véhicule, en particulier d'un véhicule automobile, est assuré par un système appelé « frein à disque » qui utilise un disque fixé sur le moyeu de la roue et des plaquettes de frein venant frotter de chaque côté du disque. Les plaquettes de frein sont maintenues dans un étrier fixé au véhicule. A chaque action de freinage, le frottement des plaquettes de frein s'accompagne, non seulement de dégagement de chaleur et d'usure des surfaces de freinage, mais aussi d'une émission de particules fines de poussière dans l'atmosphère, ce qui peut avoir des effets nocifs sur la santé.

On notera que la seule usure des plaquettes de frein représente environ 20% de l'ensemble des particules émises par le trafic routier.

Il importe, en conséquence, de collecter ces particules fines de poussière et de les stocker dans un espace dédié, de façon à éviter les effets nocifs sur la santé.

Ainsi, on connait le brevet FR 3046644 qui décrit un déflecteur situé en bout de plaquette de frein permettant de délimiter une zone d'aspiration.

On connaît aussi le brevet GB 2533476 qui décrit une lame d'air injectée à travers la plaquette par un trou et la récupération de cette pression par un canal afin de créer une lame d'air anti-frottement lors de la non-utilisation de la plaquette de frein. Ce système réalise une pression dans le système d'injection destinée à refroidir la plaquette et par ailleurs à recueillir les poussières issues du freinage.

Un tel système permet de fournir une récupération partielle des poussières provenant d'un frein de véhicule mais d'une part ce système s'avère particulièrement complexe pour un résultat tout juste satisfaisant et d'autre part sa performance dépend de l'usure de la garniture de frein puisqu'un trou d'injection d'air est réalisé directement dans une plaquette de frein.

A l'heure actuelle, il n'existe pas sur le marché de système d'aspiration de particules de poussière de frein de véhicule à la fois simple, fiable et efficace.

La présente invention a pour but de remédier aux inconvénients précités de l'art antérieur en proposant un système simple et particulièrement efficace permettant une aspiration optimum des particules provenant des freins à disque d'un véhicule, en particulier lorsque cela est particulièrement nécessaire, à savoir lors des phases de freinage.

Dans ce but, la présente invention propose un système de frein de véhicule, le système comprenant :
- un disque rotor relié à une roue de véhicule,
- un étrier comportant deux plaquettes enserrant le disque rotor de manière à freiner sa course grâce à une force de serrage, les plaquettes étant respectivement agencées sur des supports,
- un dispositif d'aspiration des particules provenant desdites plaquettes,
- un moyen d'approvisionnement en air sous pression,
au moins l'un des supports présentant au moins une fente de circulation d'air sous pression provenant du moyen d'approvisionnement, cet air sous pression formant un rideau d'air, s'étendant entre l'une des plaquettes et le disque rotor, destiné à bloquer lesdites particules.

De préférence, comme cela est illustré dans le mode d'exécution présenté en lien avec les figures annexées, chaque support, soit les deux supports classiquement prévus pour chacune des plaquettes, se présente de façon identique ou comporte les mêmes éléments selon l'invention.

Grâce au dispositif selon l'invention, on dispose d'un système de frein de véhicule à l'efficacité optimum, quelque soit le cycle d'utilisation des plaquettes de frein, ce système fonctionnant de manière totalement indépendante de l'usure des plaquettes de frein.

Avantageusement, l'invention ne prévoit aucun frottement supplémentaire généré entre le disque rotor et une ou les deux plaquettes de frein.

Enfin, selon une possibilité de mise en oeuvre de l'invention, le système de frein peut être activable uniquement pendant la phase de freinage de manière à optimiser l'utilisation du système selon l'invention et à économiser de l'énergie. Dans cette hypothèse, le système embarqué du véhicule automobile commande, à l'occasion d'une phase de freinage détectée, un signal d'activation du moyen d'approvisionnement en air sous pression et éventuellement également du dispositif d'aspiration de particules si ce dernier n'était pas déjà actif.

Grâce au système flexible selon l'invention, tout type de dispositif d'aspiration peut être monté, ou adapté, dans ce système de frein. Il peut ainsi s'agir par exemple d'un dispositif d'aspiration classique comportant une turbine créant une dépression ou d'un dispositif d'aspiration comportant une roue à aubes, entrainée en rotation par des moyens mécaniques ou électriques pour être apte à créer une telle dépression, reliée à un séparateur cyclonique et/ou un filtre à particules.

Avantageusement, selon un mode de réalisation de l'invention, le support présente au moins une fente d'aspiration pour l'aspiration desdites particules par le dispositif d'aspiration.

Selon une possibilité offerte par l'invention, le rideau d'air s'étend sur au moins 50% du pourtour de la plaquette.

On entend par l'expression « pourtour d'une plaquette » la bordure ou le bord extérieur d'une plaquette de frein, étant considéré qu'un étrier présente classiquement une paroi arrière enfermant ou cloisonnant une partie de la circonférence du disque rotor. La bordure ou le bord extérieur d'une plaquette correspond ainsi à toute la longueur périphérique ou circonférentielle de la plaquette, que cette bordure ou ce bord soit contigu ou non à une paroi de l'étrier.

Dans cette hypothèse, le rideau d'air formant au moins 50% du pourtour d'une plaquette correspond aux zones où les particules de poussières provenant de la plaquette sont les plus susceptibles de se créer et ainsi d'être retenues ou bloquées jusqu'à leur succion par le dispositif d'aspiration.

Selon une autre possibilité offerte par l'invention, le rideau d'air s'étend sur au moins 65% du pourtour de la plaquette.

Enfin, selon une dernière possibilité offerte par l'invention, le rideau d'air s'étend sur au moins 75% du pourtour de la plaquette.

Avantageusement, la fente d'aspiration s'étend sur au moins 20% du pourtour de la plaquette. De façon préférée, la zone d'aspiration (où se situe la fente d'aspiration) se trouve à l'arrière de la plaquette, soit la zone proche d'une paroi de l'étrier et non des plaquettes.

Selon une possibilité offerte par l'invention, la fente de circulation d'air est intégralement issue de moulage du support. Autrement dit, le ou les supports de plaquette sont formés par moulage, à partir d'une matière plastique ou métallique appropriée, au même moment que la fente de circulation d'air.

Selon un mode d'exécution de l'invention, le système de frein de véhicule comprend une pluralité de fentes de circulation d'air. Ainsi, chaque support de plaquette peut comprendre avantageusement de deux jusqu'à quinze fentes de circulation d'air afin de former un rideau d'air le plus étendu possible.

Selon un aspect de l'invention, le dispositif d'aspiration de particules comprend au moins un réservoir pour collecter les particules, au moins un conduit menant de la fente d'aspiration jusqu'au réservoir et un moyen d'aspiration configuré pour créer une dépression destinée à aspirer les particules.

Dans le même but, l'invention propose aussi un véhicule automobile comportant au moins un système de frein de véhicule tel que succinctement décrit précédemment.

Les avantages du véhicule conforme à l'invention étant similaires à ceux du système de véhicule énumérés plus haut, ils ne sont pas répétés ici.

D'autres aspects et avantages de l'invention apparaîtront à la lecture de la description qui suit d'un mode particulier de réalisation, donné à titre d'exemple non limitatif et en référence aux dessins qui l'accompagnent, dans lesquels :
- la figure 1 est une représentation schématique d'un système classique de disque rotor et d'étrier, soit selon l'état de la technique ;
- la figure 2 est une représentation schématique d'un étrier selon l'état de la technique ;
- la figure 3 est une représentation schématique d'un système de disque rotor et d'étrier selon l'invention dans lequel des fentes de circulation d'air, présentes dans un support de plaquette, sont visibles ;
- la figure 4 est une vue détaillée d'une partie de la figure 3 ;
- la figure 5 est une représentation schématique d'un étrier selon l'invention dans lequel les plaquettes ne sont pas présentes ;
- La figure 6 est une représentation schématique d'un étrier selon l'invention sur lequel les plaquettes ont été montées, un rideau d'air et une portion d'une zone d'aspiration étant représentés de manière visible ;
- La figure 7 est une vue détaillée d'une partie de la figure 5 sur laquelle le rideau d'air ainsi que la zone d'aspiration sont visibles ;
- La figure 8 est une vue détaillée d'une partie de la figure 6 sur laquelle le rideau d'air ainsi que la portion de la zone d'aspiration sont visibles.

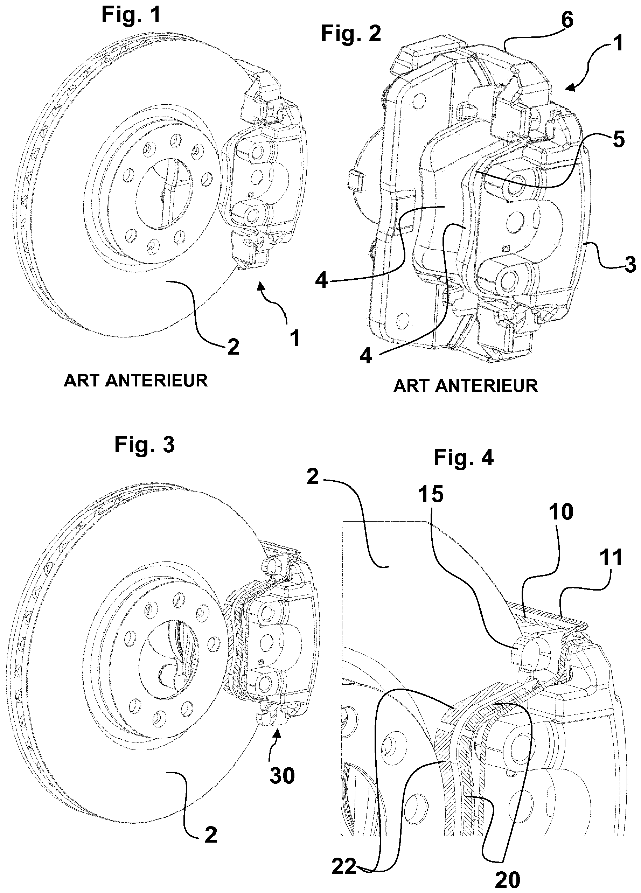

La figure 1 présente un étrier selon l'art antérieur, autrement dit un étrier classique 1 agencé sur un disque rotor 2, ces deux éléments 1, 2 (couramment désigné par l'expression de « frein à disque ») étant par ailleurs montés sur une roue de véhicule, non représentée sur les figures annexées.

Un étrier classique 1, tels que représenté sur la figure 2, comprend un corps 3 amovible comportant deux plaquettes 4 et leurs supports 5 respectifs. Ce corps 3 amovible est fixé sur un cadre 6 supportant l'ensemble qui est lui-même monté sur une partie du véhicule à proximité d'une roue du véhicule.

Ainsi, comme cela est visible sur la figure 1, un étrier 1 est destiné à être utilisé en combinaison avec un disque rotor 2, ce dernier 2 étant en lien avec la roue de véhicule. Une partie de la circonférence du disque rotor 2 vient se positionner entre les deux plaquettes 4 de sorte que ces dernières 4, lors d'une commande de frein déclenchée directement par le conducteur ou éventuellement sous la gouverne d'un système embarqué du véhicule, se resserrent et contactent plus ou moins fortement le disque rotor 2. C'est lors de ce processus de frottement/friction que les particules issues des plaquettes 4 sont libérées et doivent être récupérées par un dispositif d'aspiration, non représenté sur les figures annexées.

La présente invention n'entend pas supprimer aucune des pièces ou éléments présents dans un étrier classique 1 selon l'art antérieur. L'invention prévoit simplement une seule modification au niveau d'un élément de cet étrier 1, en l'espèce les supports 5 de plaquettes, mais elle ne modifie en rien les fonctions de chaque pièce ou élément formant l'étrier classique 1.

Ainsi, comme on peut le voir sur les figures 3 à 8 représentant un mode d'exécution du système selon l'invention, un conduit 10 transportant de l'air sous pression s'étend tout le long de la bordure, du bord ou de la périphérie extérieure d'un support 15 de plaquette. Ce conduit 10 d'apport ou de transport d'air sous pression relie un moyen d'approvisionnement en air sous pression, non représenté sur les figures annexées, à la fente ou aux fentes de circulation d'air 20 s'étendant dans le (ou au sein du) support 15 de plaquette.

Sur ces figures sont visibles en coupe schématique les fentes 20 de circulation d'air, reliées au conduit 10 d'apport d'air sous pression, présentes dans le support de plaquette. Ces fentes 20 ainsi qu'éventuellement une partie du conduit 10 sont situées intégralement dans le support de plaquette de sorte qu'elles ne sont normalement pas visibles.

Dans ce mode de réalisation, trois larges fentes 20 couvrent sensiblement l'ensemble du pourtour extérieur de la plaquette 21, soit au moins 50%, de préférence au moins 65% et de façon encore préférée au moins 75% du pourtour de la plaquette 21.

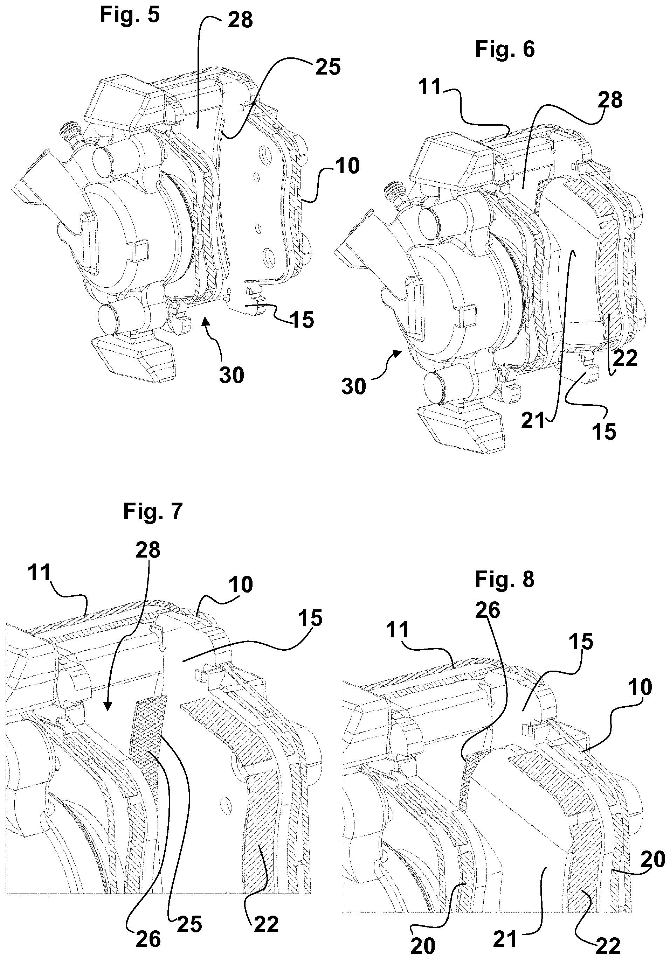

Ces fentes 20 de circulation d'air réalisées dans chaque support 15 de plaquette sont bien visibles notamment sur la figure 5 où les plaquettes 21 ne sont pas représentées dans l'étrier selon l'invention. Ces fentes 20 ont été avantageusement réalisées lors de la fabrication de la pièce formant le support 15 de plaquette 21 mais on peut également prévoir de les réaliser dans un second temps, une fois que ladite pièce a été réalisée.

Dans ce mode d'exécution, chaque support 15 de plaquette comporte également une fente d'aspiration 25 située sensiblement tout le long du côté arrière de la plaquette 21. De la même manière que pour le conduit 10 de transport ou d'apport d'air sous pression, un conduit d'aspiration 11 se déploie sur ou à proximité de la surface externe de l'étrier 30 et est relié au dispositif d'aspiration, non représenté sur les figures annexées.

On notera que la présente invention permet l'utilisation de tous types de dispositifs d'aspiration des particules provenant des plaquettes 21 dès l'instant où il produit une dépression ou analogue susceptible d'aspirer ou d'attirer lesdites particules présentes dans une zone d'aspiration 26, soit à proximité de la fente d'aspiration 25.

Ainsi, la zone d'aspiration 26 privilégiée pour l'aspiration des particules provenant des plaquettes 21 se situent à l'arrière, ou dans la zone arrière, de chaque plaquette 21. L'invention utilise de façon particulièrement avantageuse le fait de prévoir un rideau d'air 22 à l'avant ainsi qu'au dessus et en dessous de la plaquette 21 tandis que la zone d'aspiration 26, ou la fente d'aspiration 25, est prévu à l'arrière de la plaquette 21.

Bien entendu, ce mode d'exécution n'est pas limitatif et on pourra prévoir que le rideau d'air 22 s'étend sur une longueur moins importante ou au contraire plus importante, et de la même manière pour la zone d'aspiration 26. De façon similaire, le nombre de fentes de circulation d'air 20 est variable mais le système comprend avantageusement une pluralité de fentes 20 (d'orifices ou encore de canalisations) dans le support 15 de plaquette pour distribuer l'air sous pression. On prévoit néanmoins un maximum d'une douzaine, voire d'une quinzaine, de fentes de circulation d'air 20 sous pression afin de ne pas trop complexifier le réseau de distribution d'air et de ne pas fragiliser la structure des supports 15 de plaquette.

L'air sortant des fentes 20 du support 15 de plaquette forme un rideau d'air 22 sous pression qui entoure ainsi la majeure partie de la plaquette de frein 21, voire l'essentiel du pourtour de ladite plaquette 21. Ce rideau d'air 22 empêche les particules provenant de la plaquette de frein 21 de se disperser dans l'air environnant et ces particules sont de ce fait coincées ou bloquées entre le disque rotor 2, la plaquette 21 et ce rideau d'air 22. Cet espace clos est par ailleurs délimité par une paroi interne 28 de l'étrier 30.

Une fois ces particules prisonnières dans cet espace clos, le dispositif d'aspiration peut faire son office et récupérer tout ou partie desdites particules. Avantageusement, la ou les fentes d'aspiration 25, présentes dans le support 15 de plaquette, est/sont situé(es) à l'arrière de la plaquette 21 ou le long de sa bordure arrière, c'est-à-dire du côté de la paroi 28 de l'étrier 30 transversalement adjacente au disque rotor 2.

## Revendications

1. Système de frein de véhicule, le système comprenant :
- un disque rotor (2) relié à une roue de véhicule,
- un étrier (30) comportant deux plaquettes (21) enserrant le disque rotor (2) de manière à freiner sa course grâce à une force de serrage, les plaquettes (21) étant respectivement agencées sur des supports (15),
- un dispositif d'aspiration des particules provenant desdites plaquettes (21),
- un moyen d'approvisionnement en air sous pression,
**caractérisé en ce qu'**au moins l'un des supports (15) présente au moins une fente (20) de circulation d'air sous pression provenant du moyen d'approvisionnement, cet air sous pression formant un rideau d'air (22), s'étendant entre l'une des plaquettes (21) et le disque rotor (2), destiné à bloquer lesdites particules.

2. Système selon la revendication 1, **caractérisé en ce que** le support (15) présente au moins une fente d'aspiration (25) pour l'aspiration desdites particules par le dispositif d'aspiration.

3. Système selon la revendication 1 ou 2, **caractérisé en ce que** le rideau d'air (22) s'étend sur au moins 50% du pourtour de la plaquette (21).

4. Système selon l'une des revendications précédentes, **caractérisé en ce que** le rideau d'air (22) s'étend sur au moins 65% du pourtour de la plaquette (21).

5. Système selon l'une des revendications précédentes, **caractérisé en ce que** le rideau d'air (22) s'étend sur au moins 75% du pourtour de la plaquette (21).

6. Système selon la revendication 2, **caractérisé en ce que** la fente d'aspiration (25) s'étend sur au moins 20% du pourtour de la plaquette (21).

7. Système selon l'une quelconque des revendications précédentes, **caractérisé en ce que** la fente de circulation d'air (20) est intégralement issue de moulage du support (15).

8. Système selon l'une quelconque des revendications précédentes, **caractérisé en ce qu'**il comprend une pluralité de fentes de circulation d'air (20).

9. Système selon la revendication 2 ou 6, **caractérisé en ce que** le dispositif d'aspiration de particules comprend au moins un réservoir pour collecter les particules, au moins un conduit (11) menant de la fente d'aspiration (25) jusqu'au réservoir et un moyen d'aspiration configuré pour créer une dépression destinée à aspirer les particules.

10. Véhicule automobile, **caractérisé en ce qu'**il comporte au moins un système de frein de véhicule selon l'une quelconque des revendications précédentes.
